# EUROPEAN PATENT SPECIFICATION

(11) **EP 0 548 423 B1**
(45) Date of publication and mention of the grant of the patent: **10.04.1996**
(21) Application number: 91311970.7
(22) Date of filing: 23.12.1991
(51) Int. Cl.: B29C 49/48, B65D 23/10, B29C 49/22

(54) **Method for making a multi-layer plastic container with a handle**
Verfahren zur Herstellung eines mehrschichtigen Kunststoffbehälters mit einem Griff
Procédé de fabrication d'un récipient en matière plastique multi-couche avec une poignée

(43) Date of publication of application: 30.06.1993
(73) Proprietor: OWENS-ILLINOIS PLASTIC PRODUCTS INC., Toledo Ohio 43666 (US)
(72) Inventor: Krall, Thomas J., Toledo, Ohio 43614 (US); Myers, Robert A., Perrysburg, Ohio 43551 (US)
(74) Representative: Votier, Sidney David

(56) References cited:
- US-A- 3 342 916
- US-A- 3 366 290
- US-A- 3 444 285
- US-A- 3 640 672
- US-A- 3 892 828

## Description

This invention relates to blow molding hollow plastic articles and particularly to blow molding hollow plastic articles with integral handles.

### Background and Summary of the Invention

In the blow molding of hollow plastic articles, it has been common to close a hot tube within a mold and blow a hollow container with an integral handle. Where the tube comprises a single layer of plastic, this is readily achieved by pinching off the plastic in the area that forms the hollow of the handle. However, where a multi-layer plastic is desired, as, for example, where there is an intermediate plastic layer required for providing properties such as permeability or other properties as, for example, are required for containing solvent based products, it has been found that in order to weld the pinch off areas, a large and unsightly pinch off must be provided which not only is unsightly but forms a seam line that makes the handle uncomfortable to hold. In addition, this construction weakens the drop test performance of the container.

Accordingly, the object of the present invention is to provide a method and apparatus for forming multi-layer containers having an integral handle which provide for proper pinch off; which avoid large uncomfortable and unsightly pinch offs; which have adequate drop test performance; and which minimize the number of handling steps in the formation of the bottle.

In US-A-3,640,672 a blow-molded container having an integral handle is produced by means of a special blow tube, the blow tube having one opening for blowing the body of the container and another, positioned in the handle-forming part of the mold, for blowing the handle. According to US-A-3,342,916 a hollow handle is formed on a hollow water cooler cover by a "satellite" chamber formed between the handle and the main body, air injected into the satellite chamber passing through passages to form first the handle and then the main portion of the cover. In the method disclosed in US-A-3,892,828 a container having an integral handle is made by blowing a parison laminate having a high strength inner lamina and a low strength outer lamina.

US-A-3,366,290 describes a plastic container with a hollow L-shaped handle which is made by vacuum forming two half-sections provided with integral flanges, placing the half-sections together and heat-sealing the flanges. According to US-A-3,444,285 a hollow plastics container with an integral handle is formed by blowing a plastic parison into shape within a partible mold an internal section of a wall of which partially collapses a portion of the parison into flash material.

In accordance with the invention the above object is attained by the method as defined in claim 1 by the apparatus as defined in claim 4 and by the article as defined in claim 5.

More specifically the invention provides a method for making a plastic container which comprises
providing a hollow parison of molten plastic material at a blow molding temperature,
pinching a portion of the hollow parison between mold sections to form a hollow moil portion, an integral neck portion and a body forming portion, said moil portion communicating with said body portion through said neck portion,
forming an integral hollow handle portion connected to said body portion during said pinching by an integral double layer wall portion, said integral wall portion isolating said handle portion from said body portion,
forming a passage extending between the moil portion and said handle portion,
thereafter expanding the parison by applying gaseous pressure to the moil portion such that gaseous pressure passes through the moil portion to the neck portion then through the neck portion to the body portion to form the container, and through the moil portion to the said passage and then through said passage to the handle portion to expand the handle portion.

Apparatus for making a plastic container with a handle by this method comprises mirror image mold sections positioned to close about a hollow parison,
each said mold section including a hollow portion positioned to define the body of the container, a generally semi-circular portion positioned to define the finish of the container, a continuous groove for defining part of the handle, a shallow groove for defining a wall surrounded by the handle, an upper cavity for defining part of a moil portion and a groove for providing a passage in the blown container between the moil cavity and the grooves which cooperate to define the handle, said semi-circular portion providing a passage in the blown container between the moil cavity and the body cavity, said mold further including a guide portion for receiving a blow pipe for supplying gaseous pressure to the moil portion.

The invention also provides a hollow blown plastic article comprising
a hollow body portion, an integral neck portion, an integral hollow handle portion connected to the body portion by an integral wall, an integral hollow moil portion connected to the handle portion and the neck portion by said integral wall, said neck portion providing a passage in the blown article between the moil portion and the body portion, and an integral passage in said integral wall communicating between the moil portion and the hollow handle portion.

### Description of the Drawings

Fig. 1 is a perspective view of a container embodying the invention.

Fig. 2 is a perspective view of the container after it is blown and prior to being trimmed.

Fig. 3 is a fragmentary elevational view of the container.

Fig. 4 is a fragmentary sectional view taken along the line 4-4 in Fig. 3.

Fig. 5 is a fragmentary plan view of a mold for forming the container.

Fig. 6 is a fragmentary plan view showing the container in a mold section after it has been blown.

Fig. 7 the fragmentary sectional view taken along the line 7-7 in Fig. 6 with the other mold section in position.

Fig. 8 is a fragmentary sectional view taken along the line 8-8 in Fig. 6 with the other mold section in position.

### Description

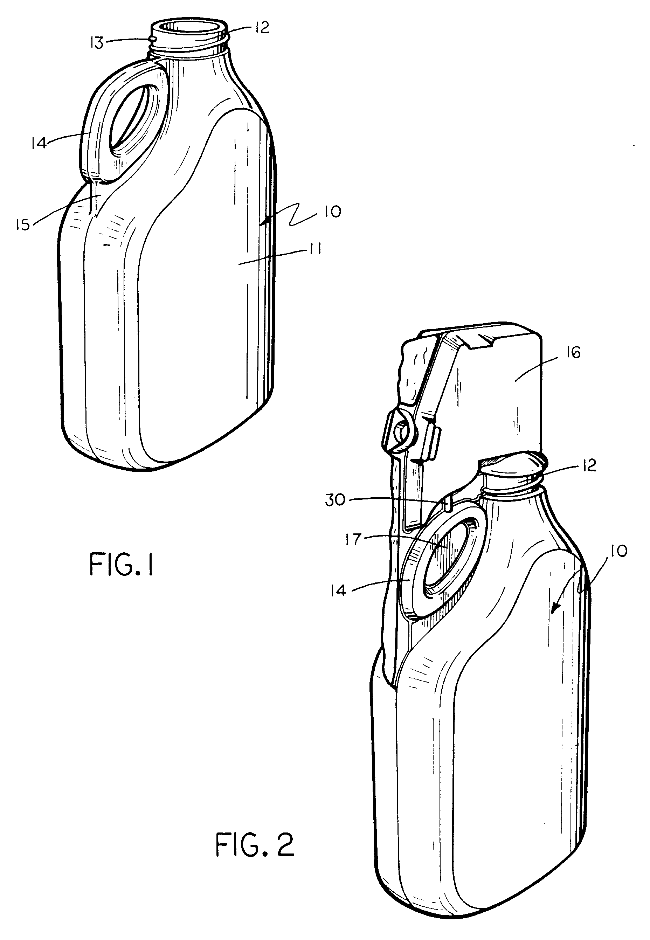

Referring to Fig. 1, the container 10 made in accordance with the invention comprises a hollow body 11 having a neck or finish 12 with fastening means for engaging a cap such as threads 13 thereon, an integral hollow handle 14 and a wall 15 connecting the handle 14 to the body 11.

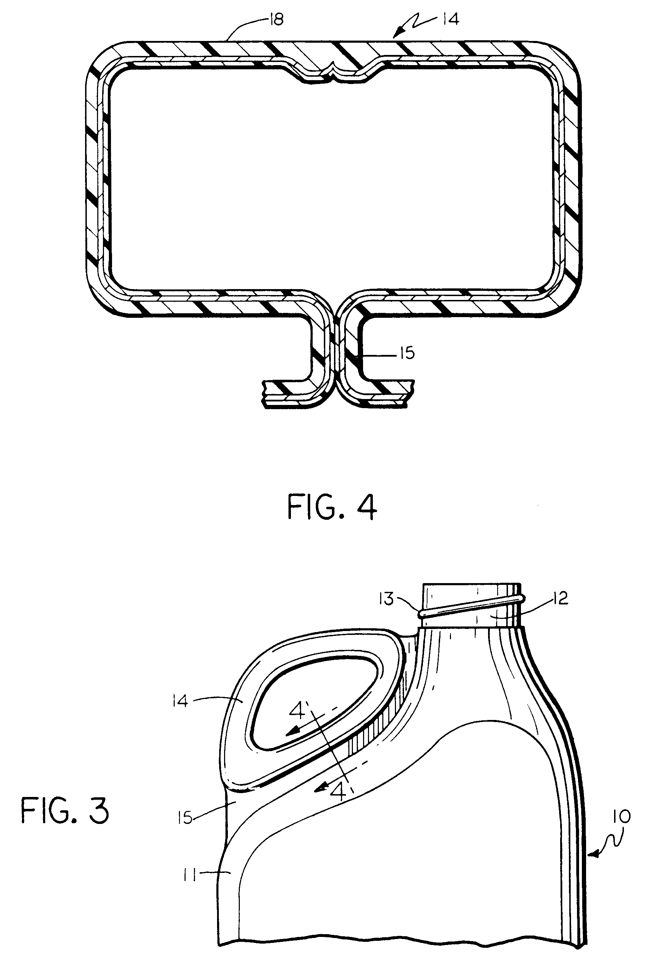

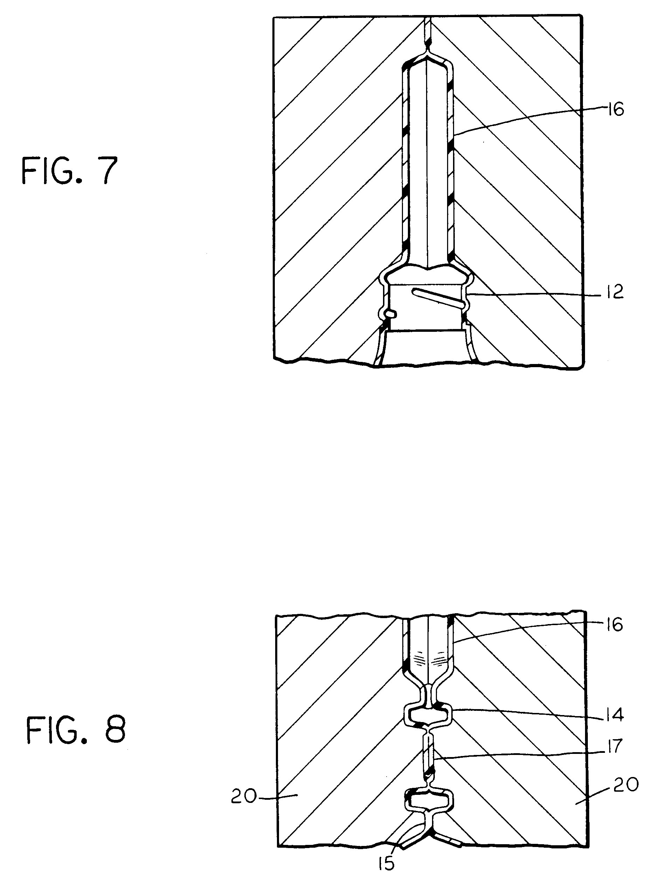

Referring to Fig. 2, as the container 10 is formed, as presently described, it includes a hollow moil portion 16 which is connected to both the handle portion 14 (Fig. 8) and the finish 12 (Fig. 7). In addition, flat plastic portion 17 closes the finger receiving opening of the handle (Fig. 8). The container thus must be trimmed to provide the configuration such as shown in Fig. 3 by removing the moil portion 16 and plastic portion 17. As can be seen from Fig. 4 which is a greatly enlarged section through the handle, the handle 14 is a multi-layer handle having a smooth continuous surface 18 and the layers of plastic are joined to form the double layered wall 15 that connects the handle to the body 11 of the container 10. The container is formed by expanding a parison within the sections of a mold.

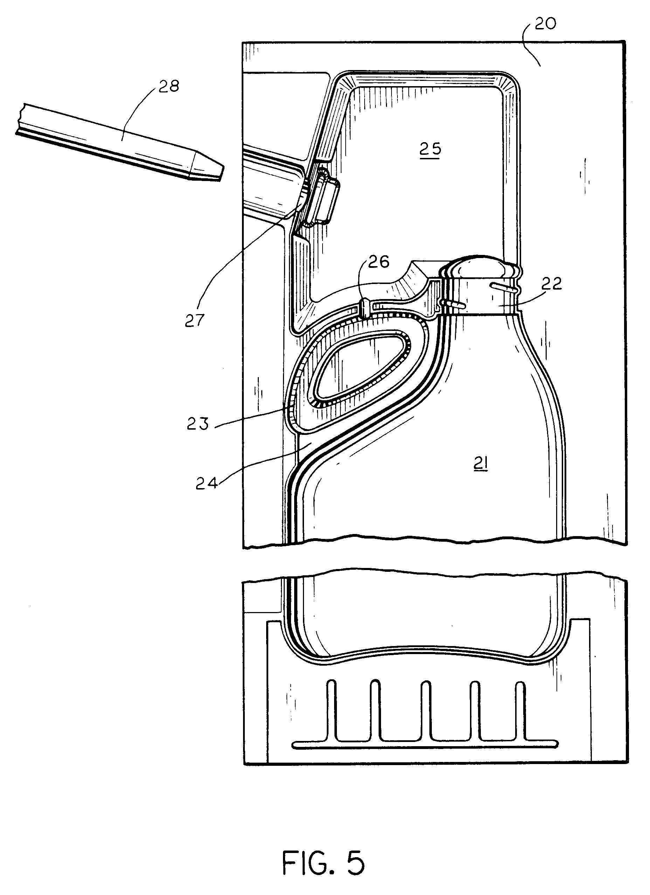

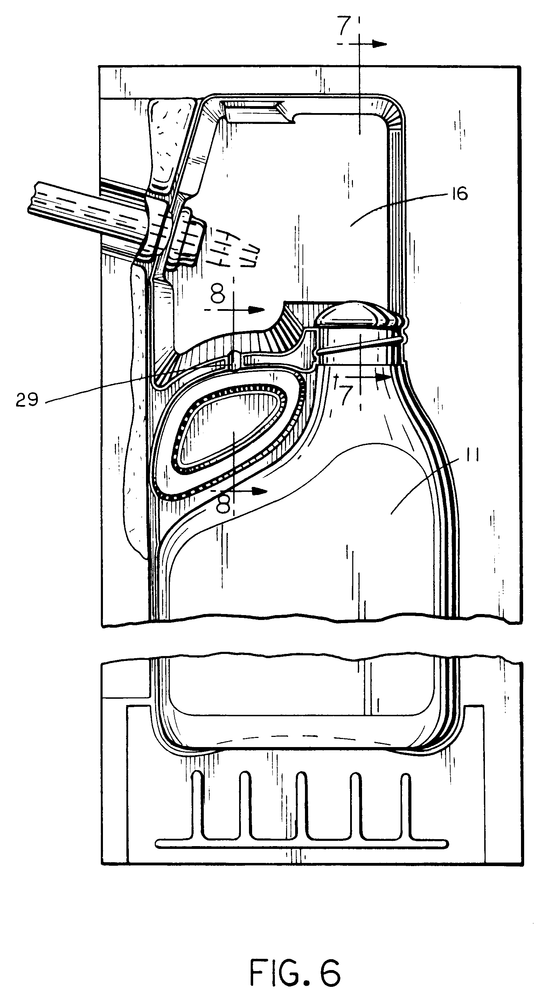

Referring to Fig. 5, one mold section 20 is shown and comprises a hollow portion 21 which is adapted to define the body of the container, a generally semi-circular portion 22 adapted to define the finish 12, a continuous groove 23 for defining part of the handle, a shallow groove 24 for defining the wall 15 and an upper cavity 25 for defining part of the moil portion 16. The mold section 20 further includes a small groove 26 for providing communication between the moil cavity 25 and the groove 23. Finally, the section 20 includes a guide portion 27 for receiving a blow pipe 28. The parison may comprise an extruded tube of plastic at blow molding temperature. When the sections of the mold are closed about the parison, the lower portion of the parison is pinched by a severe pinch off for defining the body 11 of the container, the upper portion is pinched for defining the moil portion 16, an intermediate portion is pinched for defining the handle 14, the wall 24 and the portion 17 while the groove 26 defines a passage 30 between the moil portion 25 and the groove 23. Thus when the blow pipe 28 is inserted to blow the container, as shown in Fig. 6, the expanding fluid can flow from the interior of the hollow moil 16 to the interior of the body 11 and also through the hollow portion 29 defined by the passage 30 to the interior of the handle so that the handle is blown outwardly.

After the blow molding, the container is removed from the mold and trimmed by severing the moil portion 16, wall portion 17 and trimming the finish 12.

The resultant container has a handle which does not have a rough seam line in the area of the upper portion of the handle (Fig. 4) which is engaged by the fingers. The severe pinch off in the wall 15 required for maintaining properties, such as permeability, is at the area not engaged by the fingers. Therefore, the container is more comfortable to hold and is not unsightly, has adequate drop test performance and has been made with a minimum of handling steps.

## Claims

1. A method for making a plastic container which comprises
providing a hollow parison of molten plastic material at a blow molding temperature,
pinching a portion of the hollow parison between mold sections to form a hollow moil portion (16), an integral neck portion (12) and a body forming portion (11), said moil portion (16) communicating with said body portion (11) through said neck portion (12),
forming an integral hollow handle portion (14) connected to said body portion (11) during said pinching by an integral double layer wall portion (15), said integral wall portion (15) isolating said handle portion (14) from said body portion (11),
forming a passage (30) extending between the moil portion (16) and said handle portion (14),
thereafter expanding the parison by applying gaseous pressure to the moil portion (16) such that gaseous pressure passes through the moil portion (16) to the neck portion (12) then through the neck portion (12) to the body portion (11) to form the container, and through the moil portion (16) to the said passage (30) and then through said passage (30) to the handle portion (14) to expand the handle portion (14).

2. A method as claimed in claim 1 wherein the hollow parison is a multi-layer parison.

3. A method as claimed in claim 1 or 2 including the step of trimming the hollow moil portion (16), the neck portion (12) and the area (17) surrounded by the handle.

4. An apparatus for making a plastic container with a handle by a method as claimed in claim 1 comprising
mirror image mold sections (20) positioned to close about a hollow parison,
each said mold section including a hollow portion (21) positioned to define the body of the container, a generally semi-circular portion (22) positioned to define the finish of the container, a continuous groove (23) for defining part of the handle, a shallow groove (24) for defining a wall surrounded by the handle, an upper cavity (25) for defining part of a moil portion and a groove (26) for providing a passage in the blown container between the moil cavity and the groove (23) which cooperates to define the handle, said semi-circular portion (22) providing a passage in the blown container between the moil cavity and the body cavity, said mold said mold further including a guide portion (27) for receiving a blow pipe for supplying gaseous pressure to the moil portion.

5. A hollow blown plastic article comprising
a hollow body portion (11), an integral neck portion (12), an integral hollow handle portion (14) connected to the body portion (11) by an integral wall (15), an integral hollow moil portion (16) connected to the handle portion (14) and the neck portion (12) by said integral wall (15), said neck portion (12) providing a passage in the blown article between the moil portion (16) and the body portion (11), and an integral passage (30) in said integral wall (15) communicating between the moil portion (16) and the hollow handle portion (14).

6. A blown article as claimed in claim 5 wherein said integral wall (15) comprises a double layer of plastic, each layer being multi-layered.

## Patentansprüche

1. Verfahren zur Herstellung eines Kunststoffbehälters, welches die folgenden Schritte aufweist
Bereitstellung eines hohlen Vorformlings aus geschmolzenem Kunststoff bei einer Blasverfahrentemperatur,
Einpressen eines Teiles des hohlen Vorformlings zwischen Abschnitten des Formwerkzeuges um einen hohen Kappenbereich (16), einen integralen Halsbereich (12) und einen körperbildenden Bereich (11) zu formen, wobei der Kappenbereich (16) über den Halsbereich (12) mit dem Körperbereich (11) in Verbindung steht,
Formen eines integralen hohlen Griffbereichs (14), das während des Einpressens durch einen integralen doppelschichtigen Wandbereich (15) mit dem Körperbereich verbunden wird, wobei der integrale Wandbereich (15) den Griffbereich (14) von dem Körperbereich (11) trennt,
Formen eines Durchgangs (30) der sich zwischen dem Kappenbereich (16) und dem Griffbereich (14),
anschließendes Ausdehnen des Vorformlings durch Zuführen eines Überdruckgases zu dem Kappenbereich (16), so daß das Überdruckgas durch den Kappenbereich (16) zu dem Halsbereich (12) und durch den Halsbereich (12) in den Körperbereich strömt um den Kanister zu formen, und durch den Kappenbereich (16) zu dem Durchgang (30) und durch den Durchgang (30) in den Griffbereich (14) strömt um den Griffbereich (14) auszudehnen

2. Verfahren nach Anspruch 1, bei dem der hohle Vorformling ein mehrschichtiger Vorformling ist.

3. Verfahren nach Anspruch 1 oder 2, das einen Schritt umfaßt in dem der hohle Kappenbereich (16), der Halsbereich (12) und die von dem Griff umgebene Fläche (17) abgeschnitten werden.

4. Vorrichtung zur Herstellung eines Kunststoffbehälters mit einem Griff durch ein Verfahren nach Anspruch 1, mit
spiegelbildlichen Formwerkzeugabschnitten (20) die so angeordnet sind, daß sie sich um einen hohlen Vorformling schließen,
wobei jeder Formwerkzeugabschnitt einen hohlen Bereich (21) zum Abgrenzen des Kanisterkörpers, einen im allgemeinen halbkreisförmigen Bereich (22) zum Abgrenzen des Kanisterverschlusses, eine durchgehende Nut (23) zum Abgrenzen eines Teiles des Griffes, eine flache Aussparung (24) zum Abgrenzen einer von dem Griff umgebenen Wand, einen oberen Hohlraum (25) zum Abgrenzen eines Teiles des Kappenbereiches und eine Nut (26) zur Erzeugung eines Durchgangs in dem aufgeblasenen Kanister zwischen dem Kappenhohlraum und der Nut (23), die zum Abgrenzen des Griffes zusammenwirken umfaßt, wobei der halbkreisförmige Bereich (22) in dem aufgeblasenen Kanister einen Durchgang zwischen dem Kappenhohlraum und dem Körperhohlraum erzeugt, und wobei das Formwerkzeug zusätzlich einen Führungsbereich (27) zur Aufnahme eines Blasrohres zum Zuführen des Überdruckgases in den Kappenbereich umfaßt.

5. Hohler geblasener Kunststoffartikel, mit
einem hohlen Körperbereich (11), einem integralen Halsbereich (12), einem integralen Griffbereich (14) mittels einer integralen Wand (15) mit den Körperbereich (11) verbunden ist, einen integralen hohlen Kappenbereich (16), der mittels der integralen Wand (15) mit dem Griffbereich (14) und dem Halsbereich (12) verbunden ist, wobei der Halsbereich (12) in dem aufgeblasenen Artikel einen Durchgang zwischen dem Kappenbereich und dem Körperbereich erzeugt, und einem integralen Durchgang (30) in der integralen Wand (15), der eine Verbindung zwischen dem Kappenbereich (16) und dem hohlen Griffbereich (14) herstellt.

6. Geblasener Artikel nach Anspruch 5 wobei die integrale Wand (15) eine doppelte Kunststoffschicht umfaßt, von denen jede mehrschichtig ist.

## Revendications

1. Procédé de fabrication d'un récipient en matière plastique, qui comprend :
- la préparation d'une paraison creuse en matière plastique fondue à une température de moulage-soufflage,
- le pincement d'une partie de la paraison creuse entre des sections de moule pour former une partie formant calotte creuse (16), une partie formant goulot intégré (12) et une partie formant corps (11), ladite partie formant calotte (16) communiquant avec ladite partie formant corps (11) par ladite partie formant goulot (12),
- la formation d'une partie (14) formant poignée creuse intégrée, reliée à ladite partie formant corps (11) pendant ledit pincement par une partie intégrée (15) formant paroi à double couche, ladite partie intégrée formant paroi (15) isolant ladite partie formant poignée (14) de ladite partie formant corps (11),
- la formation d'un passage (30) qui s'étend entre la partie formant calotte (16) et ladite partie formant poignée (14),
- puis la dilatation de la paraison par application d'une pression de gaz à ladite partie formant calotte (16) de telle sorte que la pression de gaz traverse la partie formant calotte (16) jusqu'à la partie formant goulot (12) puis traverse la partie formant goulot (12) jusqu'à la partie formant corps (11) afin de former le récipient et traverse la partie formant calotte (16) jusqu'audit passage (30) puis traverse ledit passage (30) jusqu'à ladite partie formant poignée (14) pour faire dilater la partie formant poignée (14).

2. Procédé selon la revendication 1, dans lequel la paraison creuse est une paraison à couches multiples.

3. Procédé selon la revendication 1 ou 2, comprenant l'étape de finition de la partie creuse formant calotte (16), de la partie formant goulot (12) et de la région (17) entourée par la poignée.

4. Appareil pour fabriquer un récipient en matière plastique muni d'une poignée grâce à un procédé conforme à la revendication 1, qui comprend :
- des sections de moule (20) images miroirs l'une de l'autre, disposées pour se fermer autour d'une paraison creuse,
- chaque section de moule comprenant une partie creuse (21) disposée pour définir le corps du récipient, une partie généralement semi-circulaire (22) disposée pour définir le goulot du récipient, une rainure continue (23) pour définir une partie de la poignée, une rainure peu profonde (24) pour définir une paroi entourée par la poignée, une cavité supérieure (25) pour définir une partie de la partie formant calotte et une rainure (26) pour former un passage dans le récipient soufflé, entre la cavité de la calotte et la rainure (23) qui coopèrent pour définir la poignée, ladite partie semi-circulaire (22) formant un passage dans le récipient soufflé, entre la cavité de la calotte et la cavité du corps, ledit moule comprenant en outre une partie de guidage (27) destinée à recevoir un tube de soufflage servant à amener une pression de gaz dans la partie formant calotte.

5. Objet en matière plastique, creux, soufflé, qui comprend :
- une partie creuse formant corps (11), une partie formant goulot intégré (12), une partie intégrée formant poignée creuse (14) raccordée à la partie formant corps (11) par une paroi intégrée (15), une partie intégrée formant calotte creuse (16) raccordée à la partie formant poignée (14) et à la partie formant goulot (12) par ladite paroi intégrée (15), ladite partie formant goulot (12) procurant un passage dans l'article soufflé entre la partie formant calotte (16) et la partie formant corps (11), et un passage intégré (30) dans ladite paroi intégrée (15) qui assure la communication entre la partie formant calotte (16) et la partie formant poignée creuse (14).

6. Objet soufflé selon la revendication 5, dans lequel ladite paroi intégrée (15) comprend une double couche de matière plastique, chaque couche étant faite de plusieurs couches.
